# EUROPEAN PATENT SPECIFICATION

(11) **EP 2 273 152 B1**
(45) Date of publication and mention of the grant of the patent: **20.03.2013**
(21) Application number: 09164696.8
(22) Date of filing: 06.07.2009
(51) Int. Cl.: F16G 11/02

(54) **Ferrules having a conical end part and method of producing thereof**
Klemmhülsen mit einem konischen Endteil und Verfahren zu deren Herstellung
Ferrules dotées d'une extrémité conique et procédé pour leur production.

(43) Date of publication of application: 12.01.2011
(73) Proprietor: Talurit AB, 421 31 Västra Frölunda (SE)
(72) Inventor: Andersson, Thommy, 426 58 Västra Frölunda (SE)
(74) Representative: Bergentall, Annika Maria

(56) References cited:
- FR-A- 1 197 320
- FR-A- 1 457 148
- FR-A1- 2 370 198
- GB-A- 879 868
- GB-A- 1 128 332
- US-A1- 2007 079 483

## Description

### Technical field

The present invention relates to a ferrule for a wire rope for sling applications and to a method in arranging a ferrule to a wire rope for sling applications, in which firstly an end of a wire rope is bent 180° around a suitable tool and secondly thereafter the same is joined to an upper part of itself by pressing thereto a ferrule in a splicing die/press under a high pressure (pressure - 100-600 N/mm²).

### Technical background

Documents FR 1457148 and GB 1128332 show prior art ferrules for a wire rope.

Previously known methods for pressing a ferrule to an end part of a wire rope in said manner comprise the use of a standard cylindrical ferrule to an end of a wire rope as described above from its preformed state, inserting the parts of said wire rope to be compressed in the ferrule in a pre-determined position and thereafter inserting the complete unit into a splicing press in order to apply a very high pressure to the outside of said ferrule with the wire rope parts inside it. Said ferrule is normally made from a suitable aluminium alloy, the constituents and proportions between these being well known in the technical field to which the invention pertains. When such a high pressure is applied to the outside of the ferrule, the material thereof is deformed in a state called floating. The material of the ferrule is thereby brought to surround every surface unit of the parts of the wire rope parts to thereby hold them together as a machine element as sturdy or better than the wire rope itself. The joint between the ferrule and the wire rope parts can be said to be a combination between a soldering and a friction fit.

When pressing said ferrule to the wire rope portions, previously used technology has led to the formation of a circumferential edge on the part of the ferrule that is situated close to the part of the wire rope that extends from said ferrule and further to for instance a crane. This edge, the height of which is only a few percent of the length of the ferrule, however, constitutes a risk factor when using a wire rope spliced in this manner when the spliced end is used to while exposed to a slide lift something heavy to pass by another edge at for instance a building site. The wire rope may during misfortunate circumstances get hung up and tensioned in an unforeseen manner, which eventually solves itself, but in worst case may cause an accident. The problem is certainly more obvious in off-shore use of lifting appliances, where also accidents, even small ones, may be life dangerous.

### Summary of the Invention

It is therefore an objective with the present invention to appropriately describe a new method according to which this edge formation problem is solved.

According to the invention the ferrule comprises one end and an opposite end, a first portion having two semicylindrical portions joined by two straight portions, wherein at said opposite end the ferrule is shaped/machined in order to shape a partially frusto conical end portion while the thickness of the material of the ferrule gradually lessens with a rounded tip as seen in side view in its length direction, and the frusto conical end portion has contouring lines along the limits where it has been machined in a non-continuous manner, pressing the ferrule with two parts of a wire rope inserted therein twice, initially with a pressing die being over sized and secondly with a pressing die correctly sized to the wire rope inserted in the ferrule. According to the invention, the method comprises pressing the ferrule with two parts of a wire rope inserted therein twice, initially with a pressing die being over dimensioned and secondly with a pressing die correctly dimensioned to the wire ropes inserted in the ferrule.

By shaping the ferrule in this way the material thereof is, when pressed in a die, forced to float in a fashion that gives a good bond with the wire rope while simultaneously the creation of a dangerous edge of the above mentioned kind is avoided.

The method of the invention comprise, in a further developed form, the introduction of lubrication between the ferrule and the die during each of the pressing operations. Said lubrication is preferably applied to the outer surface of the frusto conical portion of the ferrule so that this portion may slide with a minimum of friction in an easier fashion inside the pressing tool, to thereby, at least initially, keep its advantageous shape as the pressing operation proceed.

In a further developed form, the method comprises the introduction of a through hole to at least one of the thickest parts of the frusto conical portions thereof. The ferrule is by making use of this hole kept steadily fixed in position through the whole pressing operation, while simultaneously said hole will constitute an inspection hole for later inspection of whether or not the spliced end of the wire rope is still trustworthy and in good condition.

### Brief description of the drawings

The invention will in the following be described more in detail by reference to an embodiment thereof shown on the enclosed drawings, in which:
Fig 1 shows a perspective view of a ferrule shaped for use according to a method of the invention,
Fig 2 shows a side view of the same ferrule from one of its narrow sides,
Fig 3 shows a side view of the ferrule from its wide long side,
Fig 4 shows an end view from a frusto-conically shaped end of the ferrule,
Fig 5 shows and end view from the opposed end of said frusto-conically shaped end of the ferrule,
Fig 6 in a perspective view shows one half of a press die form of a splicing die/press tool,
Fig 7 shows a planar view of the press tool shown in fig 6 from the pressing side,
Fig 8 shows from a 90° pivoted position, as compared to the view in fig 7, the press tool in its length direction towards its "conical end", and
Fig 9 shows a perspective view of a sling of a wire rope, closed with a ferrule die formed according to the invention.

### Detailed description of an embodiment of the invention

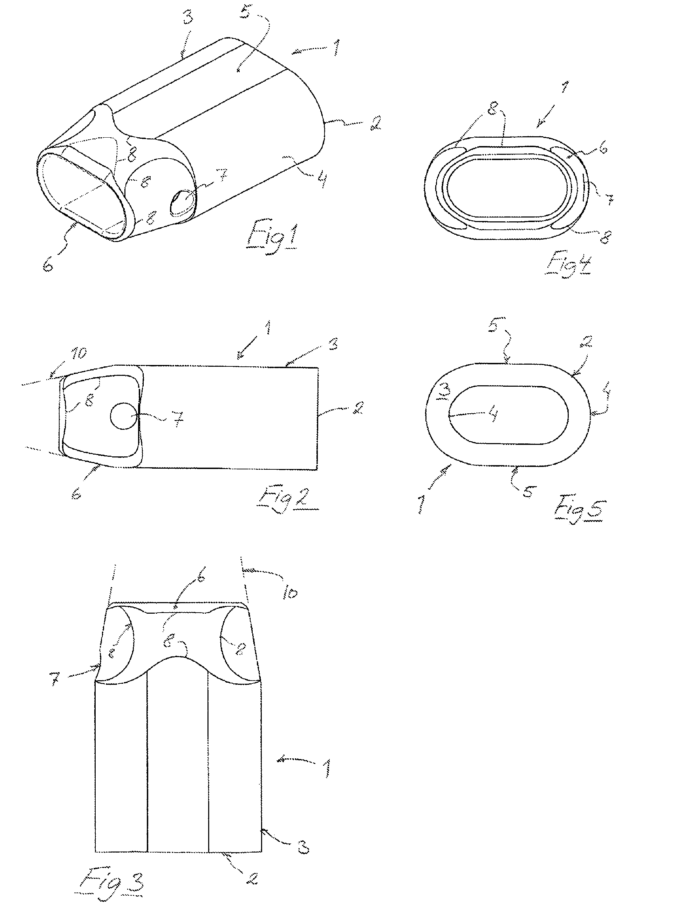

As shown in Fig 1 a ferrule 1 of an in comparison to a conventional such ferrule modified kind, is shown in perspective. The ferrule 1 at one end 2 comprises a portion 3 conventionally shaped, which in turn has two semicylindrical portions 4 joined by two straight portions 5 (as best seen in Fig 5). At the opposite end 6, the ferrule 1 is shaped, preferably through machining, to form what in each main side direction can be considered to look like a truncated cone (see the extended sight lines 10 in fig 2 and fig 3; frusto-conically shaped) while the thickness of the material of the ferrule gradually lessens.

Further Fig 2 shows a side view from a narrow long side of the ferrule 1, more precisely from the side thereof, which in Fig 1 is shown to be provided with a through hole 7. Said through hole 7 has the function of in such a die formed ferrule, that it will always be possible to observe the correct position of the free end of the wire rope inside the ferrule. Should this end due to for instance overloading or some material defect etc. start to slide inside the ferrule, this can easily be observed and taken care of. Contouring lines 8 show transitions between differently machined surfaces of the machined end portion of the ferrule 1. From this view it also becomes clear what is meant by a conventional shape at the portion 3 and a frusto conical shape at 6.

Fig 3 shows from a 90° pivoted position, how in comparison to the view in Fig 2, the ferrule looks from its broad side. It is to be noted that the through hole 7 only runs through one side of the ferrule, more precisely, the ferrule in this embodiment is provided with only one hole 7. Another thing to be noted is that said hole 7 may have a function in the process of correctly placing the ferrule in its pressing die as well as checking that the free end of the wire rope is inserted to a sufficient extent. Also in this view is shown contouring lines 8 showing the limits of the machining performed on the ferrule 1 in order to accomplish the shape that gives it the new and inventive properties described above.

From Figs 4 and 5 the shape of the respective end portions of the ferrule are shown in a similar way as the views above. Consequently fig 4 depicts a view of the frusto conical end portion 2 with its contouring lines 8 along the limits where it has been machined in a non-continuous manner to shape its frusto-conical appearance. The hole 7 in this view only appears as a straight line. Likewise Fig 5 shows from the opposite end 6 the ferrule in its least complicated part, as described above.

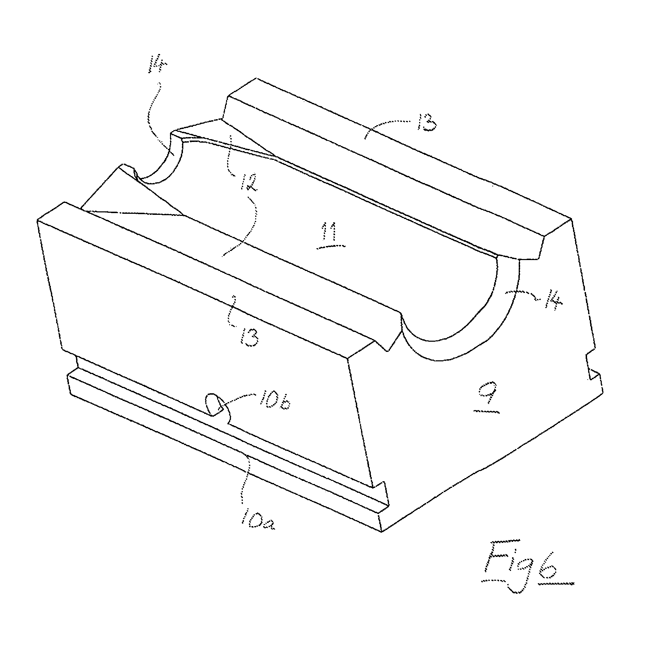

Fig 6 shows one part of a ferrule forming die 9 of a certain size. Said die 9 comprises at its lower end as seen in fig 6 means 10a, b for its releasable fixation to a chucking device (not shown). The die is in its entirety made from a specially machined steel block, which after its machining is toughened /hardened to a hard but yet tensile stiffness to allow it to "spring" during use. In its length direction, the upper side of the die 9 is before the hardening thereof machined to on the one side create a form 11 which at least partly coincides with the outer shape of one half of a compressed ferrule in either its pre-shaped or its final state. Outside this form part 11 comprising ferrule shaping parts of the forming die 9, areas 12 that can be said to be more or less conventionally negatively undercut shaped in order not to in any way disturb the forming procedure, while they instead are intended for guiding the respective forming dies into a mutual position that gives a nice and symmetrically pressed form to the ferrule 1 without the formation of pressing beards or the like, needed to be machined away afterwards. Again outside these undercut shaped parts 12 are planar portions 13 that between two mating pressing tools, a male and a female, are co-planar and during a complete pressing operation are supposed to be brought completely together. At the respective ends of the form part 11, clearance undercuts 14 are formed in order to during the pressing procedure let the metal of the ferrule float without interference when pressed at the very high pressure that is used.

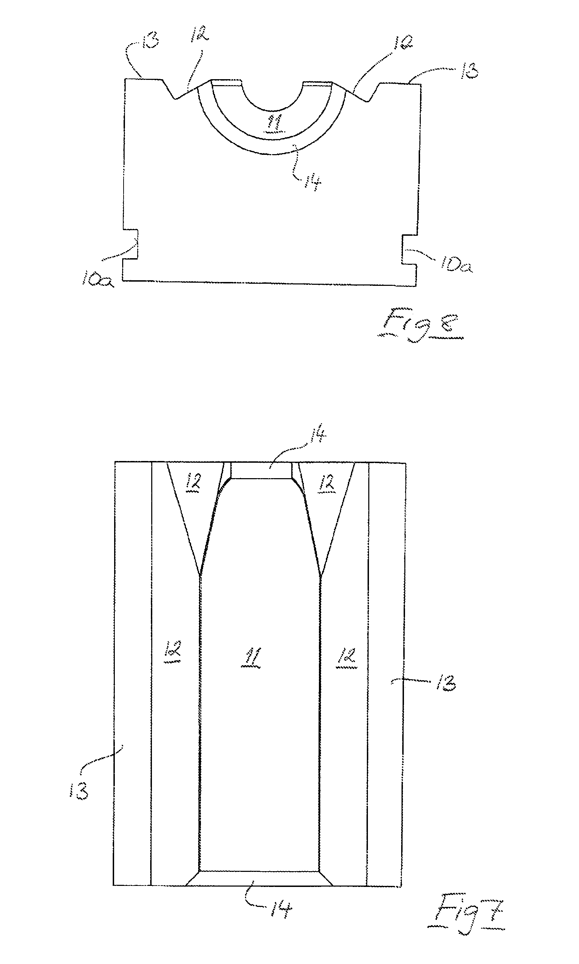

Figs 7 and 8 show planar views of the ferrule forming die 9 seen firstly (fig 7) from the side of the form part 11 of the ferrule forming die 9 and secondly (fig 8) seen from a short end thereof supposed to incorporate a most narrow end of the pressed ferrule in its ready state. From fig 7 the shape of the clearance undercuts 14 are clearly shown, while from fig 8 the inclinations of the clearance undercuts 12 in relation to the form parts 11 and the planar portions 13 are shown.

In the following a forming die pressing method in order to apply a ferrule to an end of a wire rope according to the invention will be described more in detail. A wire rope end (not shown) supposed to be provided with an eye or a loop at its end is initially bent 180° to join said end with a part of said wire rope further up along said wire rope, while said end and other part of said wire rope are initially loosely joined by a ferrule blank 1. Said blank 1, being shaped in accordance with what is described above according to fig1, is thereafter placed between mating male and female portions of a ferrule forming die pressing tool 9. The pressing operation, with the use of the pressing tool 9, is performed in two stages, the first of which is performed with an over-dimensioned forming die 9 to give the ferrule a first pre-deformation in order to be able to better control the flow pattern of the aluminium alloy of the ferrule. When putting the ferrule and the parts of the wire rope in the forming die it is essential to at least lubricate the outside of the end 6 of the ferrule in order to facilitate the deformation of the material. After having performed this first forming step the unit comprising the pre-shaped ferrule 1 and the two parts of the wire rope clamped inside the ferrule is again after application of suitable lubrication (grease) placed in a forming die 9, however this time in such a one that is dimensioned to, when applied to the ferrule under pressure form a press incorporating the two parts of a forming die, finally shape the ferrule to its desired partly conical shape.

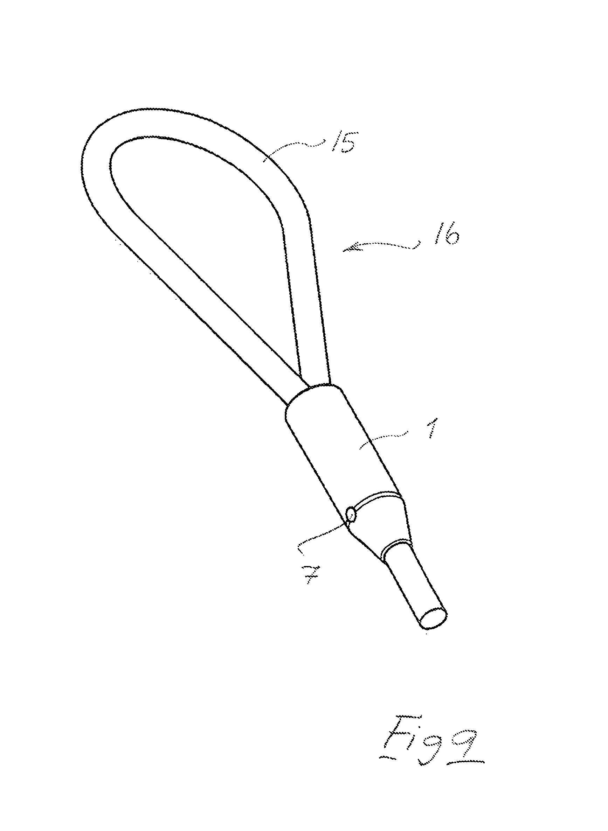

From Fig 9 there is elucidated a complete sling 16 with a cut-off end, realisable for all kinds of lifting operations through the application of the present invention. The sling 16 in question comprises an eye 15 which has been realised though a die pressing operation according to the invention on a ferrule 1, in which two parts of a wire rope has been inserted, each to a certain extent before performing a said pressing operation. This view also clearly shows the position of the hole 7 of the ferrule, whereby its double functionality becomes clear, namely firstly as a fixation element during the die pressing operation, and secondly as an inspection hole to make it possible to inspect the sling's feasabilty as a reliable lifting device. Last but not least the truncated cone shape of the end of the ferrule farthest from said sling 15 connecting to and encompassing the wire rope completely is visualised in this context.

The invention is not to be limited to the embodiment described above but is instead to be limited by the enclosed claims.

## Claims

1. A ferrule of metal material for a wire rope for sling applications which is adapted to receive an end of a wire rope bent 180°and to be received in a splicing die/press for application of a high pressure with the bent wire rope inside it, wherein
the ferrule (1) comprises one end (2) and an opposite end (6),
a first portion (3) having two semicylindrical portions (4) joined by two straight portions (5), wherein at said opposite end (6) the ferrule is shaped/machined in order to shape a partially frusto conical end portion while the thickness of the material of the ferrule gradually lessens with a rounded tip as seen in side view in its length direction, and the frusto conical end portion having contouring lines along the limits where it has been machined in a non-continuous manner.

2. A ferrule according to claim 1,
**characterized in**
**that** it comprises a through hole (7) machined to at least one of the thickest parts of the frusto conical portion of the ferrule which is adapted to assist in fixing the ferrule steadily in position in the die/press during the application of the high pressure.

3. A method in arranging a ferrule (1) as claimed in claim 1 or 2 to a wire rope for sling applications, in which firstly an end of a wire rope is bent 180° around a suitable tool and secondly thereafter the same is joined to an upper part of itself by pressing thereto a ferrule (1) in a splicing die/press under a high pressure,
**characterized in**
pressing the ferrule with two parts of a wire rope inserted therein twice, initially with a pressing die being over dimensioned and secondly with a pressing die correctly dimensioned to the wire ropes inserted in the ferrule.

4. A method according to claim 3,
**characterized in**
**that** it comprises the steps of:
- applying lubrication before both said pressing operations to the surface of the frusto-conically shaped part of the ferrule.

5. A method according to claim 4,
**characterized in**
**that** said lubrication is achieved by introducing grease between the pressing die and said frusto-conically shaped part.

6. A method according to claim 4 and 5,
**characterized in**
**that** it comprises wiping off said lubrication between each of the pressing steps.

7. A method according to any one of claims 3-6,
**characterized in**
**that** a through hole is machined to at least one of the thickest parts of the frusto conical portion of the ferrule in order to steadily fix the ferrule in position in the die/press during the pressing operation.

8. A method for producing a ferrule forming die (9) for a ferrule as claimed in claim 1 or 2,
**characterized in**
**that** it comprises:
- making the ferrule forming die (9) from a specially machined steel block,
- machining the die (9) in its length direction, on the upper side thereof, to, on one side, create a form (11) comprising ferrule shaping parts which at least partly coincides with an outer shape of one half of a compressed ferrule in either its pre-shaped or its final state,
- hardening the die (9) to a hard but yet tensile stiffness,
- providing areas (12) outside the ferrule shaping parts which are negatively undercut shaped and are intended for guiding respective forming dies into a mutual position giving a symmetrically pressed form to the ferrule (1) without formation of processing beards,
- providing planar portions (13) outside the undercut shaped parts (12) that between a male and a female mating pressing tools are co-planar and during a complete pressing operation are brought completely together,
- forming clearance undercuts (14) at the respective ends of the form part (11) in order to, during a ferrule pressing operation, let the metal of the ferrule float without interference when pressed at the high pressure.

## Patentansprüche

1. Hülse aus Metallmaterial für ein Drahtseil für Schlingenanwendungen, die geeignet ist, ein Ende eines Drahtseils aufzunehmen, das um 180° gebogen ist, und in einem Zusammenfügeunterwerkzeug/einer Zusammenfügepresse zum Anwenden eines hohen Drucks aufgenommen zu werden, wobei sich das gebogene Drahtseil in ihr befindet, wobei
die Hülse (1) ein Ende (2) und ein gegenüberliegendes Ende (6),
einen ersten Abschnitt (3) mit zwei halbzylindrischen Abschnitten (4), die durch zwei gerade Abschnitte (5) verbunden sind, wobei an dem gegenüberliegenden Ende (6) die Hülse derart geformt/maschinell hergestellt ist, dass ein teilweise kegelstumpfförmiger Endabschnitt geformt ist, während sich die Dicke des Materials der Hülse allmählich mit einer abgerundeten Spitze verringert, wie in einer Seitenansicht in ihrer Längsrichtung betrachtet, und
den kegelstumpfförmigen Endabschnitt aufweist, der Konturlinien entlang den Grenzen aufweist, wo er auf eine nicht-kontinuierliche Weise maschinell hergestellt worden ist.

2. Hülse nach Anspruch 1,
**dadurch gekennzeichnet, dass**
sie einen Durchgang (7) aufweist, der zumindest an einem der dicksten Teile des kegelstumpfförmigen Abschnitts der Hülse maschinell hergestellt ist, der geeignet ist, beim Befestigen der Hülse zuverlässig in Position in dem Unterwerkzeug/der Presse während der Anwendung des hohen Drucks behilflich zu sein.

3. Verfahren zum Anordnen einer Hülse (1) nach Anspruch 1 oder 2 an einem Drahtseil für Schlingenanwendungen, bei dem zunächst ein Ende eines Drahtseils um 180° um ein geeignetes Werkzeug gebogen wird und zweitens danach selbiges an einem oberen Teil seiner selbst durch Andrücken einer Hülse (1) daran in einem Zusammenfügeunterwerkzeug/einer Zusammenfügepresse unter einem hohen Druck verbunden wird,
**dadurch gekennzeichnet, dass**
die Hülse, in die zwei Teile eines Drahtseils darin eingesetzt sind, zweimal, anfangs mit einem Drückunterwerkzeug, das überdimensioniert ist, und zweitens mit einem Drückunterwerkzeug, das korrekt dimensioniert ist, an die Drahtseile gedrückt wird, die in die Hülse eingesetzt sind.

4. Verfahren nach Anspruch 3,
**dadurch gekennzeichnet, dass**
es die folgenden Schritte umfasst:
- Aufbringen von Schmierung vor den beiden Drückbetätigungen auf die Oberfläche des kegelstumpfförmig geformten Teils der Hülse.

5. Verfahren nach Anspruch 4,
**dadurch gekennzeichnet, dass**
die Schmierung durch Einführen von Schmiermittel zwischen das Drückunterwerkzeug und den kegelstumpfförmig geformten Teil erhalten wird.

6. Verfahren nach Anspruch 4 oder 5,
**dadurch gekennzeichnet, dass**
es Abwischen der Schmierung zwischen jedem der Drückschritte umfasst.

7. Verfahren nach einem der Ansprüche 3 bis 6,
**dadurch gekennzeichnet, dass**
ein Durchgang zumindest an einem der dicksten Teile des kegelstumpfförmigen Abschnitts der Hülse maschinell hergestellt wird, um die Hülse zuverlässig in Position in dem Unterwerkzeug/der Presse während der Drückbetätigung zu befestigen.

8. Verfahren zum Herstellen eines
Hülsenausbildungsunterwerkzeugs (9) für eine Hülse nach Anspruch 1 oder 2,
**dadurch gekennzeichnet, dass**
es umfasst:
- Herstellen des Hülsenausbildungsunterwerkzeugs (9) aus einem eigens maschinell hergestellten Stahlblock,
- maschinelles Herstellen des Unterwerkzeugs (9) in seiner Längsrichtung auf der oberen Seite davon zum Herstellen, auf einer Seite, einer Ausbildung (11), die Hülsenformteile aufweist, die zumindest teilweise mit einer Außenform einer Hälfte einer komprimierten Hülse in ihrem vorgeformten oder ihrem Endzustand übereinstimmt,
- Härten des Unterwerkzeugs (9) zu einer harten, aber dennoch dehnbaren Steifigkeit,
- Vorsehen von Bereichen (12) außerhalb der Hülsenformteile, die negativ hinterschnitten geformt sind und dazu gedacht sind, entsprechende Ausbildungsunterwerkzeuge in eine gegenseitige Position zu führen, was der Hülse (1) eine symmetrisch gedrückte Ausbildung ohne Ausbildung von Verarbeitungswiderhaken gibt,
- Vorsehen ebener Abschnitte (13) außerhalb der hinterschnitten geformten Teile (12), die zwischen einem Steckerfügedrückwerkzeug und einem Buchsenfügedrückwerkzeug koplanar sind und während einer vollständigen Drückbetätigung vollständig zusammengebracht werden,
- Ausbilden von Freiraumhinterschneidungen (14) an den entsprechenden Enden des Ausbildungsteils (11), um, während einer Hülsendrückbetätigung, das Metall der Hülse ohne Beeinflussung fließen zu lassen, wenn es bei dem hohen Druck gedrückt wird.

## Revendications

1. Virole en matériau métallique destinée à un câble d'acier pour des applications d'élingue qui est conçue pour recevoir une extrémité d'un câble d'acier plié à 180° et pour être reçue dans une matrice/presse de jonction pour l'application d'une pression élevée avec le câble d'acier plié à l'intérieur de celle ci,
la virole (1) comprenant une extrémité (2) et une extrémité opposée (6),
une première partie (3) ayant deux parties semi-cylindriques (4) reliées par deux parties rectilignes (5), la virole étant mise en forme/usinée à ladite extrémité opposée (6) afin de former une partie d'extrémité partiellement tronconique tandis que l'épaisseur du matériau de la virole diminue progressivement avec un bout arrondi comme montré dans une vue latérale dans sa direction de la longueur, et la partie d'extrémité tronconique ayant des lignes de contour le long des limites où elle a été usinée de manière non continue.

2. Virole selon la revendication 1,
**caractérisée en ce qu'**elle comprend un trou traversant (7) usiné dans au moins l'une des parties les plus épaisses de la partie tronconique de la virole, qui est conçu pour faciliter la fixation régulière de la virole en position dans la matrice/presse durant l'application de la pression élevée.

3. Procédé d'agencement d'une virole (1) selon la revendication 1 ou 2, à un câble d'acier pour des applications d'élingue, dans lequel, premièrement, une extrémité d'un câble d'acier est pliée à 180° autour d'un outil approprié et, deuxièmement, cette extrémité est par la suite reliée à sa partie supérieure en pressant contre celle-ci une virole (1) dans une matrice/presse de jonction sous une pression élevée,
**caractérisé par** :
le fait de presser la virole avec deux parties d'un câble d'acier inséré deux fois dans celle-ci, premièrement avec une matrice de pressage qui est surdimensionnée et deuxièmement avec une matrice de pressage dimensionnée correctement, contre les câbles d'acier insérés dans la virole.

4. Procédé selon la revendication 3,
**caractérisé en ce qu'**il comprend les étapes consistant :
- à appliquer une lubrification avant lesdites deux opérations de pressage à la surface de la partie mise en forme tronconique de la virole.

5. Procédé selon la revendication 4,
**caractérisé en ce que** ladite lubrification est réalisée en introduisant une graisse entre la matrice de pressage et ladite partie mise en forme tronconique.

6. Procédé selon la revendication 4 et 5,
**caractérisé en ce qu'**il comprend le fait de nettoyer ladite lubrification entre chacune des étapes de pressage.

7. Procédé selon l'une quelconque des revendications 3 à 6,
**caractérisé en ce qu'**un trou traversant est usiné dans au moins l' une des parties les plus épaisses de la partie tronconique de la virole afin de fixer régulièrement la virole en position dans la matrice/presse durant l'opération de pressage.

8. Procédé de fabrication d'une matrice de formage de virole (9) pour une virole selon la revendication 1 ou 2,
**caractérisé en ce qu'**il comprend le fait :
- de fabriquer la matrice de formage de virole (9) à partir d'un bloc en acier spécialement usiné,
- d'usiner la matrice (9) dans sa direction de la longueur, sur son côté supérieur, pour, d'une part, créer une forme (11) comprenant des parties de mise en forme de virole qui coïncide au moins en partie avec une forme extérieure d'une moitié d'une virole comprimée soit dans son état préformé ou dans son état final,
- de durcir la matrice (9) jusqu'à une rigidité dure mais encore élastique,
- de fournir des surfaces (12) à l'extérieur des parties de mise en forme de virole qui sont mises en forme de dégagement négatif et sont destinées à guider des matrices de formage respectives à une position mutuelle donnant une forme symétriquement pressée à la virole (1) sans formation de barbes de traitement,
- de fournir des parties planaires (13) à l'extérieur des parties mises en forme de dégagement (12) qui sont coplanaires entre des outils de pressage d'accouplement mâle et femelle et qui sont complètement réunies durant une opération de pressage complète,
- de former des dégagements formant jeu (14) au niveau des extrémités respectives de la partie de forme (11) afin de permettre la déformation du métal de la virole sans interférence lorsqu'il est pressé à la pression élevée, durant une opération de pressage de virole.
